# EUROPEAN PATENT APPLICATION

(11) **EP 4 116 904 A1**
(43) Date of publication of application: **11.01.2023**
(21) Application number: 21202571.2
(22) Date of filing: 14.10.2021
(51) Int. Cl.: G06Q 10/08

(54) **MATERIAL TRACKING AND MANAGEMENT SYSTEM USING ELECTRONC TAGS**

(30) Priority: 09.07.2021 TW 110125413
(71) Applicant: AI Biomaterial Healthtech Limited, Kowloon, Hong Kong (HK)
(72) Inventor: Ho, Yen-Yi, Taoyuan City (TW); Gong, Huei-Yun, New Taipei City (TW); Huang, Yen-Yun, Hsinchu City (TW)
(74) Representative: Kurig, Thomas

(57) **Abstract**

A material tracking and management system is disclosed, which comprises multi electronic tags respectively connected to containers, a first electronic device, and a second electronic device. After the containers are placed in a storage environment, the first electronic device accesses each electronic tag to acquire a cold storage condition for the material accommodated in the container, and detects an ambient temperature of the storage environment through a temperature sensor.

As a result, the first electronic device calculates an adjustment parameter for adjusting the expiration date based on the ambient temperature and the cold storage condition. After the container is transported to a user environment, the second electronic device accesses the electronic tag to acquire the adjustment parameter and a regular expiration date, thereby adjusting the regular expiration date to an instant expiration date.

## Description

### BACKGROUND OF THE INVENTION

### 1. Field of the Invention

The present invention relates to a distribution technology for materials which requires to be stored at low temperatures, and more particularly, to a material tracking and management system using electronic tags.

### 2. Description of the Prior Art

With the spread of coronavirus disease 2019 (COVID-19), the cumulative number of global deaths continues to upsurge. Therefore, every country in the world is committed to the research, development, and manufacture of COVID-19 vaccines. It is known up to date that COVID-19 vaccines are classified into mRNA, adenovirus and spike protein types. Among them, the vaccines of Moderna and BioNTech (BNT) belong to the mRNA type, while the vaccines of AstraZeneca and Johnson & Johnson belong to the adenovirus type. On the other hand, the vaccine of Novavax belongs to the spike protein type.

In general, a vaccine is manufactured by the manufacturers and then transported by a professional logistical company at low temperatures to a designated location, such as a low-temperature warehouse, hospital, or vaccine injection site. Further, for vaccination, a medical staff will unpack a box and take out a vaccine vial, and vaccinate a patient using a syringe after confirming that information on the vial label is correct. It can be easily understood that tracing the manufacturer, type, storage and transportation method (including cold storage conditions), and use process of the vaccine can be very crucial. In light of this perspective, Taiwan Utility Model Patent No. M610783 discloses a pharmaceutical tracking management system. In accordance with the disclosure in Patent No. M610783, an electronic tag, such as an RFID tag or an NFC tag, is attached to a medicine vial, and pharmaceutical information related to the vial is written into a memory of the electronic tag. The aforementioned pharmaceutical information at least includes a National Drug Code (NDC), a lot number, a serial number, ingredients, and a regular expiration date.

According to the disclosure of Taiwan Patent No. M610783, after the vaccine is sealed in the vial, the manufacturer's staff may access the pharmaceutical information as described using a special electronic device with an electronic tag access function. Therefore, during the transportation of the vaccine, the logistics company's staff may write the logistics history of the vaccine into the memory of the electronic tag by using the special electronic device. The logistics history as described includes a temperature control record, a positioning record, logistics vehicle number information and the logistics staff's information. After the vaccine is delivered to a hospital, a medical staff, while using the bottled vaccine, is also able to write a usage history of the vaccine into the memory of the electronic tag by using the aforementioned special electronic device, wherein the medical history as described includes, but not limited to, the medical staff's information, a vaccination time, patient identity information, patient physiological information, and patient medical history information, etc. In this design, in the event that allergy or other adverse reactions occur to a patient who is vaccinated with the vaccine, the medical staff can look up in the database and access the pharmaceutical information, logistics history, and usage history in the corresponding electronic tag, thereby determining the origin of the problem.

In spite of the fact that a pharmaceutical tracking management system is disclosed by Taiwan Patent No. M610783, the disclosed pharmaceutical tracking management system is found to have some drawbacks which are summarized as follows.

(1) Though the vaccines of AstraZeneca, BioNTech, Johnson & Johnson, Novavax, and others are all bottled in vials, "cold storage conditions" vary with different types of vaccines. For instance, a cold storage condition for the BNT vaccine is at a temperature from -60 to -80°C, while a cold storage condition for the AstraZeneca vaccine is at a temperature from 2 to 8°C. Even though the cold storage condition required for the BNT vaccine can also be adjusted to a temperature from 2 to 8°C, it must be completely used within 120 hours thereafter. In other words, an instant change of the cold storage temperature would significantly affect an actual expiration date of the vaccine. In detail, when the cold storage temperature of a storage environment does not conform to the cold storage condition required for a vaccine, a qualitive change occurs to the vaccine located in such storage environment, and the change will inevitably become even worse as storage time becomes longer. Yet, in general, the medical staff would not particularly pay attention to the location and temperature control records during the process of using of vaccine, but only pay special attention to a lot number, serial number, ingredients, and regular expiration date in the pharmaceutical information. This is because ingredients of a vaccine may be an allergen to certain patients, while the regular expiration date is provided by the manufacturer, and vaccines that are expired beyond the regular expiration date must be scrapped. To be more detailed, if an emergent situation occurs during the transportation or storage of the vaccine, causing the cold temperature of the storage environment to fail to meet the cold storage condition required for the vaccine, the longer the emergent situation lasts, the more essentially an actual expiration date of the vaccine would be affected. However, in terms of the technical solution provided in the prior art, the medical staff would not be able to recognize a current change of the vaccine expiration date according to the logistics history (e.g., the temperature control record) and/or the pharmaceutical information (e.g., the ingredients and regular expiration date) of the vaccine.

(2) On the other hand, as disclosed in Taiwan Utility Model Patent No. M610783, the chip in the electronic tag attached to the vial includes an identification tag, a positioning unit, an anti-counterfeiting unit, a temperature sensor and a battery. Nevertheless, a commercial regular electronic tag is basically composed of only a coil, a radio frequency chip, a microcontroller chip and a memory. Consequently, it can be understood that the chip used in the electronic tag disclosed in Taiwan Utility Model Patent No. M610783 is a specific chip, which results in higher manufacturing cost for the electronic tag as described and seriously leads to impacts on pharmaceutical manufacturers' purchase intentions. Moreover, it would be well-known to electronic engineers who have been involved in the design and manufacture of sensor circuits over a long time that thermistors are the simplest type of temperature sensors, and must be used with an analog front-end circuit to read voltage change signals thereof, which are converted into digital numbers by a digital processing circuit at a rear end, and lastly, temperature sensing values representing the digital numbers are calculated by employing an algorithm. Therefore, Taiwan Utility Model Patent No. M610783 discloses that the electronic tag comprises the temperature sensor, but does not disclose any reading chip for the temperature sensor, and as a result, the temperature sensor turns out to be a redundant component without any substantial functionality.

According to above descriptions, it is understood that, there are still rooms for improvement in the conventional pharmaceutical tracking management systeme. In view of that, inventors of the present application have made great efforts to make inventive research and eventually provided a material tracking and management system using electronic tags.

### SUMMARY OF THE INVENTION

The primary objective of the present invention is to disclose a material tracking and management system using electronic tags, which comprises a plurality of electronic tags respectively connected to a plurality of containers, at least one first electronic device and at least one second electronic device. In which, each of the containers contains a material, and each of the electronic tags includes a memory for storing basic material information corresponding to the material. As described in more detail below, the basic material information includes a material identification code, a lot number, a serial number, ingredients, a regular expiration date, and a cold storage condition. According to the present invention, during the storage and transportation of the containers, the first electronic device receives an ambient temperature of a storage environment through a temperature sensing device, performs an expiration date calibration and determination based on the cold storage condition and the ambient temperature, and then writes an expiration date calibration parameter written into the memory of each of the electronic tags if an expiration date calibration process is required to be performed,. As such, after the second electronic device reads from the electronic tag corresponding to the container on a user end, a display screen of the second electronic device displays an instant expiration date of the material contained in the container.

It should be understood that when the material tracking and management system using electronic tags described in the present invention is applied to a currently existing Warehouse Management System (WMS), Enterprise Resource Planning (ERP) system with Success and Failure Factors of Adopting (SAP) function, and/or Supervisory Control and Data Acquisition (SCADA) System of enterprises or hospitals, it can facilitate the enterprises or hospitals to track and manage expiration dates of food and/or pharmaceuticals thereof to effectively prevent the food and/or medicine which is expired beyond the expiration dates from being misused, thereby achieving overall reduction in the occurrence probability of adverse drug events and/or food poisioning incidents.

In order to achieve the aforementioned objective, a material tracking and management system using electronic tags according to a first embodiment of the present invention is provided, which includes:
a plurality of electronic tags, connected to a plurality of containers respectively, wherein each of the containers contains a material, and a memory of each of the electronic tags stores basic material information corresponding to the material;
at least one first electronic device, located together with the plurality of containers in the storage environment, including a computing unit, and configured to read/write the electronic tags simultaneously; and
at least one second electronic device, located in a user environment, including a display screen, and configured to read/write the electronic tags;
wherein the basic material information includes a material identification code, a lot number, a serial number, ingredients, a regular expiration date and a cold storage condition;
wherein after the plurality of containers are placed in the storage environment, the first electronic device as described reads from the electronic tag corresponding to each container, so as to determine the cold storage condition for the material contained in each container;
wherein the plurality of containers are placed in the storage environment for a certain storage period, and the first electronic device as described receives an ambient temperature of the storage environment from a temperature sensing device during the storage period;
wherein the computing unit of the first electronic device as described performs an expiration date calibration and determination process based on the cold storage condition and the ambient temperature, and writes an expiration date calibration parameter into the memory of each of the electronic tags when an expiration date calibration process is required to be performed;
wherein after at least one of the containers is transported to the user environment, the second electronic device reads from the electronic tag corresponding to the container to acquire the basic material information which includes the regular expiration date and the adjusted expiration date, and displays the instant expiration date of the material contained in the container on the display screen.

In some applicable embodiments, the storage environment as described is any one selected from a group consisting of a cargo storage space of a vehicle, a cargo storage space of a warehouse, a cargo storage space of a transportation cabinet, a cargo storage space of a freezer, and a cargo storage space of a refrigerated cabinet.

In some applicable embodiments, the material as described is a vaccine, bacterial strain, medicine, blood, specimen, seafood, wine, fruit or vegetable, frozen food, refrigerated food and any other article with a special requirement for a cold storage temperature.

In some embodiments, the second electronic device as described further includes a warning unit, which displays an expiration date warning message on the display screen based on the instant expiration date.

In some applicable embodiments, the first electronic device as described further includes a cold storage condition-expiration date look-up table (LUT).

In some applicable embodiments, the electronic tag as described is a radio frequency identification (RFID) tag, an ultra-high frequency radio frequency identification (UHF RFID) tag or a near-field communication (NFC) tag.

In some applicable embodiments, each of the first electronic device and the second electronic device as described is an industrial computer with an electronic tag read/write function, a smart phone with an electronic tag read/write function, a tablet computer with an electronic tag read/write function, a laptop computer with an electronic tag read/write function, a desktop computer with an electronic tag read/write function, an integrated computer with an electronic tag read/write function or a point of sale system (POS) with an electronic tag read/write function.

In some applicable embodiments, the material tracking and management system using electronic tags of the present invention further includes a third electronic device that enables the first electronic device, in the presence of a wireless network, to transmit the basic material information and the expiration date calibration parameter which are written into the memory of each of the electronic tags as described to the third electronic device, and that enables the second electronic device as described to receive the basic material information and the expiration date calibration parameter corresponding to each of the electronic tags from the third electronic device.

In some applicable embodiments, the third electronic device as described is a cloud database, a cloud server, a cloud computing device or a cloud hard drive.

Further, a material tracking and management system using electronic tags according to a second embodiment of the present invention is provided, which includes:
a plurality of electronic tags, connected to a plurality of containers respectively, wherein each of the containers contains a material, and a memory of each of the electronic tags stores basic material information corresponding to the material;
at least one first electronic device, located together with the plurality of containers in a storage environment, and configured to read/write the electronic tags; and
at least one second electronic device, including a computing unit, and configured to read/write the electronic tags simultaneously;
wherein the basic material information includes a material identification code, a lot number, a serial number, ingredients, a regular expiration date and a cold storage condition;
wherein after the plurality of containers are placed in the storage environment, the first electronic device as described reads from the electronic tag corresponding to each container, so as to determine the cold storage condition for the material contained in each container;
wherein the plurality of containers are placed in the storage environment for a certain storage period, and the first electronic device as described receives an ambient temperature of the storage environment from a temperature sensing device during the storage period, and then writes the sensed ambient temperature into the memory of each of the electronic tags as described;
wherein after at least one of the containers is transported to the user environment, the second electronic device reads from the electronic tag corresponding to the container to acquire the basic material information which includes the regular expiration date and the cold storage condition and the ambient temperature as described, the computing unit of the second electronic device then performs an expiration date calibration and determination process based on the cold storage condition and the ambient temperature, and writes an expiration date calibration parameter the memory of each of the electronic tags when an expiration date calibration process is required to be performed. Simultaneously, the second electronic device reads from the electronic tag corresponding to the container to acquire the basic material information which includes the regular expiration date and the expiration date calibration parameter, and displays an instant expiration date of the material contained in the container on the display screen.

In some applicable embodiments, the second electronic device as described further includes a warning unit, which displays an expiration date warning message on the display screen based on the instant expiration date.

In some applicable embodiments, the first electronic device as described further includes a cold storage condition-expiration date look-up table (LUT).

In some applicable embodiments, each of the first electronic device and the second electronic device as described is an industrial computer with an electronic tag read/write function, a smart phone with an electronic tag read/write function, a tablet computer with an electronic tag read/write function, a laptop computer with an electronic tag read/write function, a desktop computer with an electronic tag read/write function, an integrated computer with an electronic tag read/write function, or a point of sale system (POS) with an electronic tag read/write function.

In some applicable embodiments, the material tracking and management system using electronic tags of the present invention further includes a third electronic device that enables the first electronic device, in the presence of a wireless network, to transmit the basic material information and the expiration date calibration parameter which are written into the memory of each of the electronic tags as described to the third electronic device, and that enables the second electronic device as described to receive the basic material information and the expiration date calibration parameter corresponding to each of the electronic tags from the third electronic device.

In some applicable embodiments, the third electronic device as described is a cloud database, a cloud server, a cloud computing device or a cloud hard drive.

Moreover, a usage of a material tracking and management system using electronic tags of the present invention is further provided, which is applied in the integration with a warehouse management system (WMS), an enterprise resource planning (ERP) system with a resource success and failure factors of adopting (SAP) function, and/or a supervisory control and data acquisition (SCADA) system.

### BRIEF DESCRIPTION OF THE DRAWINGS

The invention as well as a preferred mode of use and advantages thereof will be best understood by referring to the following detailed description of an illustrative embodiment in conjunction with the accompanying drawings, wherein:
- FIG. 1: shows is an illustrative diagram of a material tracking and management system using electronic tags according to a first embodiment of the present invention;
- FIG. 2: shows a block diagram of the material tracking and management system using electronic tags according to the first embodiment of the present invention;
- FIG. 3: shows a schematic illustration of the display screen of the second electronic device;
- FIG. 4: shows another schematic illustration of the display screen of the second electronic device;
- FIG. 5: shows a schematic diagram of the connection for information transmission between one first electronic device and one third electronic device;
- FIG. 6: shows a schematic diagram of the connection for information transmission between multiple first electronic devices and the third electronic device; and
- FIG. 7: shows a block diagram of the material tracking and management system using electronic tags according to a second embodiment of the present invention.

### DETAILED DESCRIPTION OF THE PREFERRED EMBODIMENTS

To more clearly describe a material tracking and management system using electronic tags according to the present invention, embodiments of the present invention will be described in detail with reference to the attached drawings hereinafter.

### First embodiment

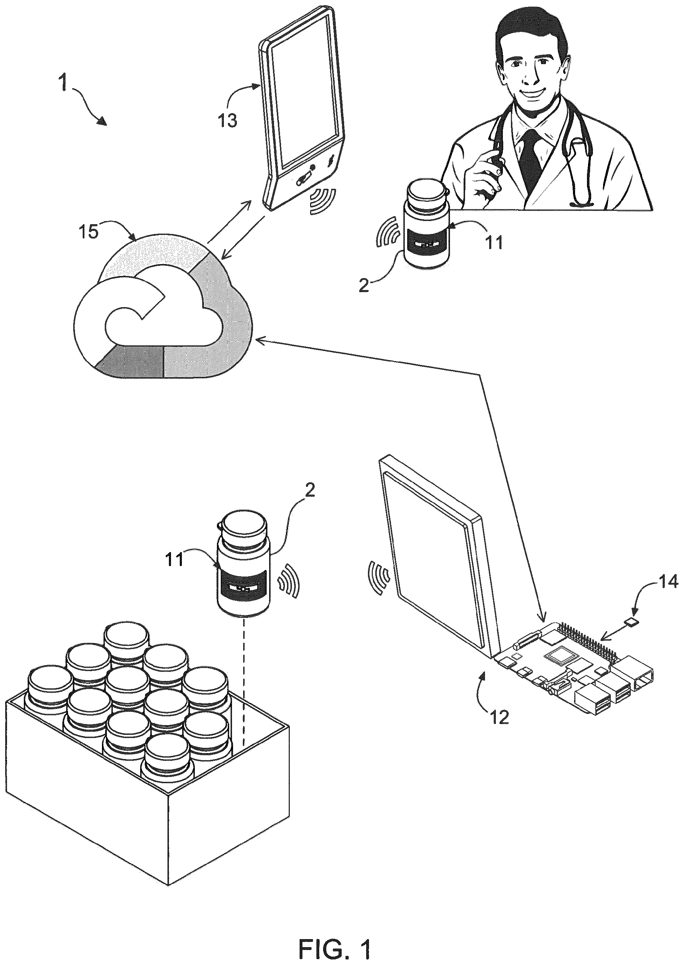

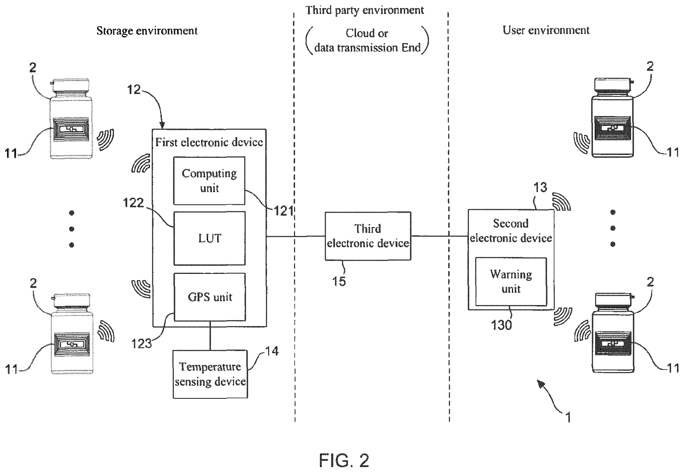

Referring to FIG. 1, there is shown an illustrative diagram of a material tracking and management system using electronic tags according to a first embodiment of the present invention. In addition, FIG. 2 illustrates a block diagram of the material tracking and management system using electronic tags according to the first embodiment of the present invention. As shown in FIGS. 1 and 2, in the first embodiment, a material tracking and management system 1 using electronic tags of the present invention mainly includes, but not limited to, a plurality of electronic tags 11, at least one first electronic device 12, and at least one second electronic device 13. Further, the plurality of electronic tags 11 are connected to a plurality of containers 2, respectively. The connection referred thereto may be either surface-attached or integrated. In general, each container 2 as described contains a material (for example, a vaccine), and a memory of each electronic tag 11 stores basic material information corresponding to the material. The basic material information includes, but not limited to, a material identification code, a lot number, a serial number, ingredients, a regular expiration date and a cold storage condition. For example, in a scenario where the material is a drug or a vaccine, the material identification code is a drug code.

To be more detailed, the at least one first electronic device 12 and the plurality of containers 2 are located in a storage environment at the same time. For example, the material contained in each container 2 is a vaccine. It should be understood that after the vaccine is produced by the manufacturer, it is transported with the assistance of a professional low-temperature logistics company to a designated location, such as a low-temperature warehouse, a hospital, or a vaccine injection site. Expectedly, during the process of vaccine transportation and storage, the cold storage condition of the storage environment is strictly required. Therefore, the storage environment may include, but not limited to, a cargo storage space of a vehicle, a cargo storage space of a warehouse, a cargo storage space of a transportation cabinet, a cargo storage space of a freezer, and a cargo storage space of a refrigerated cabinet.

As shown in FIGS. 1 and 2, the first electronic device 12 is placed together with the plurality of containers 2 in the storage environment at the same time, and is provided with an electronic tag read/write function. In particular, a computing unit 121 is provided in the first electronic device 12 of the present invention. In this design, after the plurality of containers 2 are placed in the storage environment (e.g., a cargo storage space of a transportation vehicle), the first electronic device 12 reads from the electronic tag 11 of each container 2, so as to determine the cold storage condition for the material contained in each container 2. Then, since the plurality of containers 2 are usually placed in the storage environment as described for a certain storage period, the first electronic device 12 is configured to receive an ambient temperature of the storage environment from a temperature sensor device 14. For example, the plurality of containers 2 are transported by a transportation vehicle from location A to location B for 3 hours.

Therefore, during the 3 hours of transportation, the first electronic device 12 acquires the ambient temperature in the storage environment. Thereafter, the computing unit 121 inside the first electronic device 12 performs an expiration date calibration and determination process based on the cold storage condition (obtained from the electronic tag 11) and the ambient temperature (obtained from the temperature sensing device 14). Then, when an expiration date calibration process is required to be performed, an expiration parameter is written into the memory of each electronic tag 11. Lastly, after at least one of the containers 2 is transported to the user environment as described, the second electronic device 13 reads from the electronic tag 11 corresponding to the container 2 to acquire the basic material information including, but not limited to, the regular expiration date and the expiration date calibration parameter, and then, displays an instant expiration date of the material contained in container 2 is on a display screen thereof.

For another example, after the plurality of containers 2 are transported to location B to be frozen for N hours. During the process of frozen storage, the first electronic device 12 acquires the ambient temperature in the storage environment. Accordingly, the computing unit 121 inside the first electronic device 12 performs the expiration date calibration and determination process based on the cold storage condition (obtained from the electronic tag 11) and the ambient temperature (obtained from the temperature sensing device 14). Thereafter, when the expiration date calibration process is required to be performed, the expiration date calibration parameter is written into the memory of each electronic tag 11. Lastly, after at least one of the containers 2 is transported to the user environment, the second electronic device 13 reads from the electronic tag 11 corresponding to the container 2 to acquire the basic material information including, but not limited to, the regular expiration date and the expiration date calibration parameter, and then displays the instant expiration date of the material contained in container 2 on the display screen.

In addition, as shown in FIG. 2, the first electronic device 12 is further provided with a GPS unit 123 used to record a GPS location of the storage environment where the plurality of containers 2 are located. Further, the first electronic device 12 writes the GPS location into the memory of the electronic tag 11. In other words, when the plurality of containers 2 are stored at location A, the GPS unit 123 records a GPS location of location A. Further, after the plurality of containers 2 are transported from location A to location B by the transportation vehicle, the GPS unit 123 records a GPS location of location B. Lastly, after the plurality of containers 2 are transported by the transportation vehicle from location B to a user end (such as a hospital), the GPS unit 123 records a GPS location of the user end.

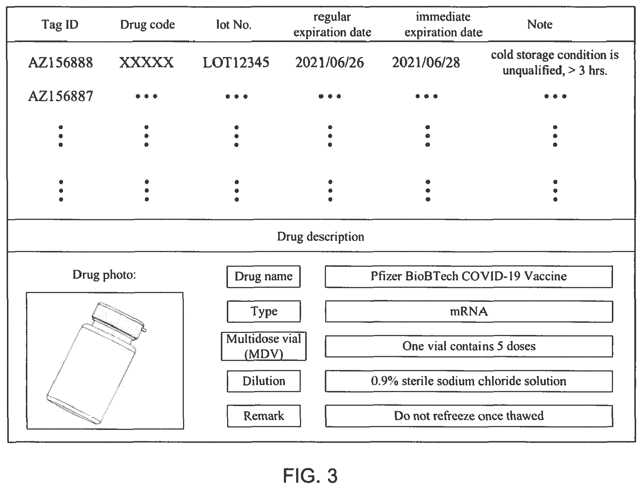

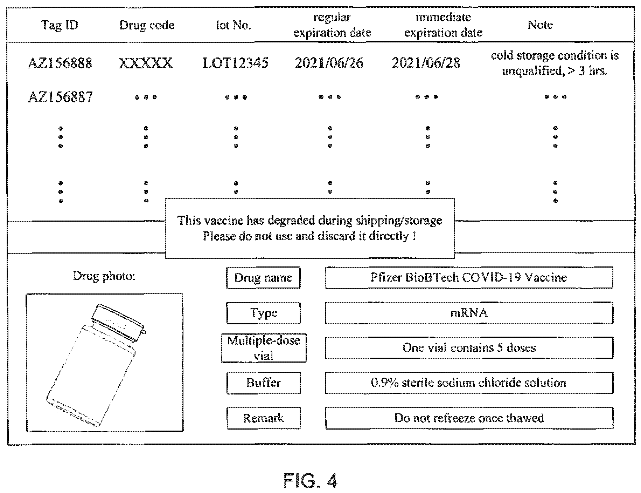

FIGS. 3 and 4 schematically illustrate the display screen of the second electronic device 13. For example, the material contained in one of the containers 2 is a vaccine. As such, a medical staff operates the second electronic device 13 to access the electronic tag 11 corresponding to the container 2 during the process of using the vaccine. As shown in FIG. 3, after accessing the electronic tag 11, basic material information corresponding to the vaccine is displayed on the display screen of the second electronic device 13, which includes a drug code (i.e., a material identification code), a lot number, a serial number, ingredients, and a regular expiration date. It is to be noted that as shown in FIG. 4, after completing the access operation on the electronic tag 11, the second electronic device 13 acquires the expiration date calibration parameter written by the first electronic device 12 simultaneously. Accordingly, the second electronic device 13 can promptly calculate an instant expiration date of the vaccine according to the expiration date calibration parameter and the regular expiration date. Moreover, the second electronic device 13 further includes a warning unit 130, which displays an expiration date warning message on the display screen according to the instant expiration date, as illustrated in FIG. 4.

In particular, as illustrated in FIGS. 1 and 2, the first electronic device 12 is also provided with a cold storage condition-expiration date look-up table (LUT) 122 therein. The cold storage condition-expiration date LUT 122 as described is configured to store standard cold storage conditions and impacts caused by an ambient temperature change on the expiration date of the material (i.e., the change of the expiration date) recited in a product instruction (or specification) that is provided in a format of compressed data by a manufacturer. In this design, the computing unit 121 can perform material qualitive change determination based on the cold storage condition, the ambient temperature and the cold storage condition-expiration date LUT 122. It should be understood that the cold storage condition-expiration date LUT 122 is provided by the manufacturer. Table 1 below demonstrates the cold storage condition-expiration-date LUT 122 created for vaccines, for example.

**Table 1**

| Manufacturer | Product Name | Cold Storage Condition | Note |
|---|---|---|---|
| BioNTech | Comirnaty (BNT162b2) | -60°C \| -80°C | It must be completely used within 120 hours as the cold storage condition changes from 2 °C to 8 °C. |
| AstraZeneca | Vaxzevria (ChAdOx1-S) | 2°C \| 8°C | It must be completely used within 6 hours as the cold storage condition changes from 9 °C to 25 °C. |
| Moderna | Spikevax (mRNA-1273) | -15°C \| -25°C | It must be completely used within 30 days as the cold storage condition changes from 2 °C to 8 °C. |

On the other hand, although FIG. 1 illustrates the first electronic device 12 as including a dedicated computer (i.e., a specific industrial purpose computer) and a RFID antenna, and illustrates the second electronic device 13 as a handheld electronic device with a touch screen. However, it should not be regarded that the first electronic device 12 and the second electronic device 13 are limited to the embodied aspects. When the present invention is practically applied, each of the first electronic device 12 and the second electronic device 13 may be an industrial computer with an electronic tag read/write function, a smart phone with an electronic tag read/write function, a tablet computer with an electronic tag read/write function, a laptop computer with an electronic tag read/write function, a desktop computer with an electronic tag read/write function, an integrated computer with an electronic tag read/write function, or a point of sale system (POS) with an electronic tag read/write function.

Further, it would be well known to electronic engineers who have been involved in the design and production of electronic tags over a long period of time that the electronic tag 11 illustrated in FIGS 1 and 2 may be a radio frequency identification (RFID) tag, an ultra-high frequency radio frequency identification (UHF RFID) tag or a near-field communication (NFC) tag.

In addition, in an applicable embodiment, the temperature sensing device 14 illustrated in FIG. 1 is a temperature sensor and is integrated in the first electronic device 12 as described. Further, in another applicable embodiment, the temperature sensing device 14 and the first electronic device 12 shown in FIG. 1 are two independent devices, each of which may include at least one temperature sensor and an electronic circuit used to control the temperature sensor, and the electronic circuit is coupled to the first electronic device 12. In an applicable embodiment, the electronic circuit of the temperature sensing device 14 may include an energy harvesting IC. When the first electronic device 12 emits a radio wave, the energy harvesting IC is capable of harvesting energy via the radio wave, thereby providing required electric energy to a control IC in the electronic circuit and the temperature sensor device, so as to drive the temperature sensor to perform ambient temperature sensing.

In an applicable embodiment, as the cold storage space of the transportation vehicle is already provided with a temperature sensor module to monitor the ambient temperature, the temperature sensor module may also be directly coupled to the first electronic device 12 in a wired or wireless manner, so as to serve as the temperature sensing device 14 illustrated in FIG. 1.

Furthermore, in yest another applicable embodiment, the temperature sensing device 14 shown in FIG. 1 is a temperature sensor node based on Internet of Things (IoT) technology, and the first electronic device 12 is coupled with the temperature sensing device 14 via a wireless network. It would be well known to rlectronic engineers who have been involved in the design and production of IoT sensors over a long time that the temperature sensor node is usually designed as a small-volumed dongle, which includes an electronic circuit and at least one temperature sensor. The electronic circuit may include an energy harvesting IC. When the first electronic device 12 emits a radio wave, the energy harvesting IC is capable of harvesting energy via the radio wave, thereby providing required electric energy to the control IC in the electronic circuit and the temperature sensor, so as to drive the temperature sensor to perform ambient temperature sensing. After driving the temperature sensor to collect sensed data, the electronic circuit uploads the collected sensed data to an external electronic device via a wireless network of, for example, a NB-IoT gateway, a smartphone or a laptop computer of a data collection engineer, a local server, a cloud server, etc. In this way, the wireless network as described may be implemented by using an NB-IoT transmission interface, a Bluetooth transmission interface, a ZigBee transmission interface, a Wimax transmission interface, a LoRA transmission interface, a WiFi transmission interface, or an infrared transmission interface. Certainly, in some applicable embodiments, the first electronic device 12 and the temperature sensing device 14 may also be connected with each other in a wired manner, provided that the two devices may communicate with each other to implement signal transmission.

It should be noted that the material tracking and management system 1 using electronic tags of the present invention illustrated in FIGS. 1 and 2 further includes a third electronic device 15 provided in a third-party environment, for example, a cloud or a data forwarding end. In this design, the first electronic device 12 as described, in the presence of a wireless network (e.g., a WiFi, 4G, or 5G network), may transmit the basic material information and the expiration date calibration parameter which are written into the memory of each of the electronic tags 11 to the third electronic device 15. As such, the second electronic device 13 may receive the basic material information and the expiration date calibration parameter corresponding to each of the electronic tags 11 from the third electronic device 15. Therefore, it can be understood that the third electronic device 15 may be a cloud database, a cloud server, a cloud computing device, or a cloud hard drive.

It can be understood according to the description set forth above that the material tracking and management system using electronic tags in the present invention is mainly integrated in a warehouse management system (WMS), an enterprise resource planning (ERP) system with a rsuccess and failure factors of adopting (SAP) function, and/or a supervisory control and data acquisition (SCADA) system , which facilitates tracking and managing the expiration dates of food and/or pharmaceuticals thereof to effectively prevent the food and/or medicine which is expired beyond the expiration date from being misused, thereby achieving overall reduction in the occurrence probability of adverse drug events and/or food poisioning incidents. In other words, as illustrated in FIG. 2, the material contained in each container 2 is not limited to the vaccine. In some applicable embodiments, the material may be a bacterial strain, medicine, blood, specimen, seafood, wine, fruit or vegetable, frozen food, refrigerated food, and any other article with a special requirement for a cold storage temperature.

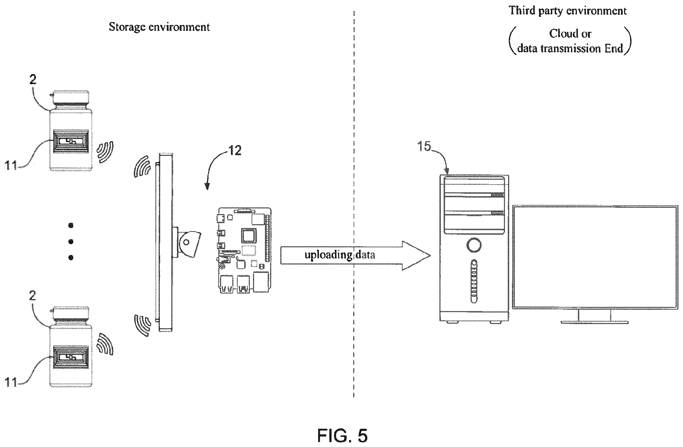

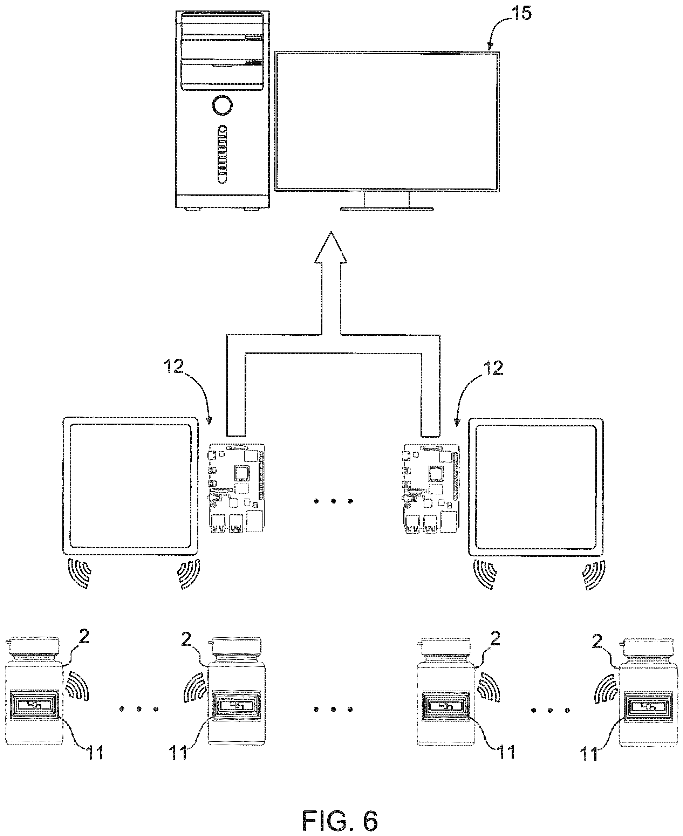

FIG. 5 is a schematic diagram of the connection for information communication between one first electronic device 12 and one third electronic device 15, and FIG. 6 is a schematic diagram of the connection for information communication between multiple first electronic devices 12 and one third electronic device 15. As illustrated in FIGS. 2 and 5, in an applicable embodiment, one single first electronic device 12 may be placed in the storage environment, so that the first electronic device 12 may be used to read/write the plurality of electronic tags 11 in the storage environment. Further, after completing the write operation of the electronic tags, the first electronic device 12, in the presence of the wireless network, transmits the written data to the third electronic device 15. On the other hand, as illustrated in FIGS. 2 and 6, in another applicable embodiment, multiple first electronic devices 12 may be placed in the storage environment, so that the first electronic devices 12 may be used to read/write the plurality of electronic tags 11 in that storage environment. Moreover, after completing the write operation on the electronic tags, the first electronic devices 12, in the presence of the wireless network, transmit the written data to the third electronic device 15.

### Second embodiment

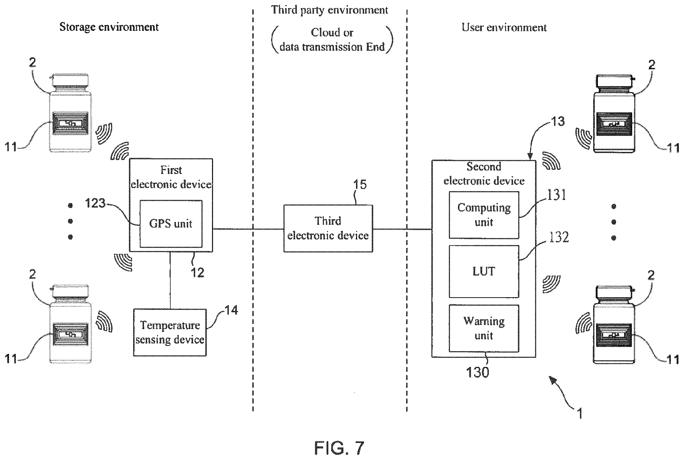

Referring to FIG. 1 again, together with FIG 7, FIG. 7 is a block diagram of the material tracking and management system 1 using electronic tags according to a second embodiment of the present invention. As illustrated in FIGS. 1 and 7, in the second embodiment, the material tracking and management system 1 using electronic tags of the present invention also includes a plurality of electronic tags 11, at least one first electronic device 12, and at least one of second electronic device 13. After comparing FIGS .7 with 2, it should be understood that the first electronic device 12 of the second embodiment includes neither the aforementioned computing unit 121 for performing the expiration date calibration and determination process nor the cold storage condition-expiration date (LUT) 122, and instead, the second electronic device 13 is provided with the computing unit 131 for performing the expiration date calibration and determination process and the cold storage condition-expiration date (LUT) 132.

In this design, after the plurality of containers 2 are placed in the storage environment as described, the first electronic device 12 accesses the electronic tag 11 of each container 2 to determine the cold storage condition for the material contained in each container 2. Further, the first electronic device 12, during the storage period, receives an ambient temperature of the storage environment from the temperature sensing device 14, and then writes the sensed ambient temperature into the memory of each electronic tag 11. Further, after at least one of the containers 2 is transported to the user environment, the second electronic device 13 accesses the electronic tag 11 of each container 2 to receive the basic material information which includes the regular expiration date and the cold storage condition and the ambient temperature. Then, the computing unit 131 of the second electronic device 13 performs the expiration date calibration and determination process based on the cold storage condition and the ambient temperature. Thereafter, when an expiration date calibration is required to be perfprmed, an expiration date calibration parameter is written into the memory of each of the electronic tags 11. Meanwhile, the second electronic device 13 accesses the electronic tag 11 of the container 2 to acquire the basic material information including the regular expiration date and the expiration date calibration parameter, and then, displays an instant expiration date of the material contained in the container 2 on the display screen.

Therefore, above descriptions, all embodiments and their functions of the material tracking and management system using electronic tags according to the present invention have been introduced completely and clearly. The above description is made on embodiments of the present invention. However, the embodiments are not intended to limit scope of the present invention, and all equivalent implementations or alterations within the spirit of the present invention still fall within the scope of the present invention.

## Claims

1. A material tracking and management system using electronic tags, comprising:
a plurality of electronic tags, being connected to a plurality of containers respectively, wherein each of the plurality of containers contains a material, and a memory of each of the plurality of electronic tags storing a basic material information;
at least one first electronic device, being located together with the plurality of containers in a storage environment, and being configured to read/write the electronic tags; and
at least one second electronic device, being located in a user environment, and being configured to read/write the electronic tags;
wherein the basic material information comprises a material identification code, a lot number, a serial number, ingredients, a regular expiration date, and a cold storage condition;
wherein after the plurality of containers are placed in the storage environment, the first electronic device reads from the plurality of electronic tags so as to determine the cold storage condition for the material correspondingly contained in each of the plurality of containers;
wherein the first electronic device having a first microprocessor, and the first microprocessor comprises a first program including instructions for:
controlling a temperature sensor assembly that is disposed in the storage environment to detect an ambient temperature in case of the plurality of containers being placed in the storage environment for a certain storage period; and
calculating an adjustment parameter based on the cold storage condition and the ambient temperature, and writing the adjustment parameter into the memory of each of the plurality of electronic tags;
wherein the second electronic device having a second microprocessor, and the second microprocessor comprises a second program including instructions for:
controlling the second electronic device to read the plurality of electronic tags in case of the plurality of containers being moved to the user environment, so as to acquire the basic material information comprising the regular expiration date and the adjustment parameter;
calculating an instant expiration date based on the regular expiration date and the adjustment parameter; and
controlling the second electronic device to show the instant expiration date on a display.

2. The material tracking and management system of claim 1, wherein the storage environment is selected from a group consisting of a cargo storage space of a vehicle, a cargo storage space of a warehouse, a cargo storage space of a transportation cabinet, a cargo storage space of a freezer and a cargo storage space of a refrigerated cabinet.

3. The material tracking and management system of claim 1, wherein the material is selected from a group consisting of vaccine, bacterial strain, medicine, blood, specimen, seafood, wine, fruit or vegetable, frozen food and refrigerated food.

4. The material tracking and management system of claim 1, wherein the second program including instructions for: controlling the second electronic device to show a warning message on the display in case of based the instant expiration date being soon fall due.

5. The material tracking and management system of claim 1, wherein the first electronic device further comprises a GPS interface configured to monitor a GPS location information of the storage environment where the plurality of containers are located, and the first electronic device writing the GPS location information into the memory of each of the electronic tags.

6. The material tracking and management system of claim 1, wherein the temperature sensor assembly is integrated in the first electronic device.

7. The material tracking and management system of claim 1, wherein the first electronic device further having a memory for storing a look-up table (LUT), such that the first microprocessor is able to acquire the adjustment parameter by looking up the look-up table based on the cold storage condition and the ambient temperature.

8. The material tracking and management system of claim 1, wherein the temperature sensor assembly comprises at least one temperature sensor and an electronic circuit, and the electronic circuit comprising an energy harvesting IC configured to harvest an energy from an wireless signal that is emitted by the first electronic device, thereby providing an electric power to the electronic circuit and the temperature sensor.

9. The material tracking and management system of claim 1, wherein the temperature sensor assembly is a temperature sensor node based on Internet of Things (IoT) technology, and wirelessly communicating with the first electronic device.

10. The material tracking and management system of claim 9, wherein the first electronic device is coupled to the temperature sensor assembly via a wireless interface selected from a group consisting of NB-IoT interface, Bluetooth interface, ZigBee interface, Wimax interface, LoRA interface, and Wi-Fi interface.

11. The material tracking and management system of claim 1, wherein the electronic tag is a radio frequency identification (RFID) tag, an ultra-high frequency radio frequency identification (UHF RFID) tag or a near-field communication (NFC) tag.

12. The material tracking and management system of claim 1, wherein the first electronic device and the second electronic device are both selected from a group consisting of industrial computer, smart phone, tablet computer, laptop computer, desktop computer, and a point of sale system (POS).

13. The material tracking and management system of claim 1, further comprising a third electronic device that enables the first electronic device to, in the presence of a wireless network, transmit the basic material information and the expiration date calibration parameter which are written into the memory of of each of the electronic tags to the third electronic device, and that enables the second electronic device to receive the basic material information and the expiration date calibration parameter corresponding to each of the electronic tags from the third electronic device.

14. The material tracking and management system of claim 13, wherein the third electronic device is selected from a group consisting of cloud database, cloud server, cloud computing device, and cloud hard drive.

15. A material tracking management system using electronic tags, comprising:
a plurality of electronic tags, being connected to a plurality of containers respectively, wherein each of the plurality of container contains a material, and a memory of each of the plurality of electronic tags storing a basic material information;
at least one first electronic device, being located together with the plurality of containers in a storage environment, and being configured to read/write the electronic tags; and
at least one second electronic device, being located in a user environment, and configured to read/write the electronic tags;
wherein the basic material information comprises a material identification code, a lot number, a serial number, ingredients, a regular expiration date, and a cold storage condition;
wherein after the plurality of containers are placed in the storage environment, the first electronic device reads from the plurality of electronic tag so as to determine the cold storage condition for the material correspondingly contained in each of the plurality of containers;
wherein the first electronic device having a first microprocessor, and the first microprocessor comprises a first program including instructions for:
controlling a temperature sensor assembly that is disposed in the storage environment to detect an ambient temperature in case of the plurality of containers being placed in the storage environment for a certain storage period; and
writing a data of ambient temperature into the memory of each of the electronic tags;
wherein the second electronic device having a second microprocessor, and the second microprocessor comprises a second program including instructions for:
controlling the second electronic device to read the plurality of electronic tags in case of the plurality of containers being moved to the user environment, so as to acquire the data of ambient temperature and the basic material information comprising the regular expiration date and the adjustment parameter;
calculating an instant expiration date based on the regular expiration date and the data of ambient temperature; and
controlling the second electronic device to show the instant expiration date on a display.

16. The material tracking management system of claim 15, wherein the storage environment is selected from a group consisting of a cargo storage space of a vehicle, a cargo storage space of a warehouse, a cargo storage space of a transportation cabinet, a cargo storage space of a freezer and a cargo storage space of a refrigerated cabinet.

17. The material tracking and management system of claim 15, wherein the material is selected from a group consisting of vaccine, bacterial strain, medicine, blood, specimen, seafood, wine, fruit or vegetable, frozen food and refrigerated food.

18. The material tracking and management system of claim 15, wherein the first electronic device further comprises a GPS interface configured to monitor a GPS location information of the storage environment where the plurality of containers are located, and the first electronic device writing the GPS location information into the memory of each of the electronic tags.

19. The material tracking and management system of claim 15, wherein the second program including instructions for: controlling the second electronic device to show a warning message on the display in case of based the instant expiration date being soon fall due.

20. The material tracking and management system of claim 15, wherein the temperature sensor assembly is integrated in the first electronic device.

21. The material tracking and management system of claim 15, wherein the first electronic device further having a memory for storing a look-up table (LUT), such that the first microprocessor is able to acquire the adjustment parameter by looking up the look-up table based on the cold storage condition and the ambient temperature.

22. The material tracking and management system of claim 15, wherein the temperature sensor assembly comprises at least one temperature sensor and an electronic circuit, and the electronic circuit comprising an energy harvesting IC configured to harvest an energy from an wireless signal that is emitted by the first electronic device, thereby providing an electric power to the electronic circuit and the temperature sensor.

23. The material tracking and management system of claim 15, wherein the temperature sensor assembly is a temperature sensor node based on Internet of Things (IoT) technology, and wirelessly communicating with the first electronic device.

24. The material tracking and management system of claim 23, wherein the first electronic device is coupled to the temperature sensor assembly via a wireless interface selected from a group consisting of NB-IoT interface, Bluetooth interface, ZigBee interface, Wimax interface, LoRA interface, and Wi-Fi interface.

25. The material tracking and management system of claim 15, wherein the electronic tag is a radio frequency identification (RFID) tag, an ultra-high frequency radio frequency identification (UHF RFID) tag or a near-field communication (NFC) tag.

26. The material tracking and management system of claim 15, wherein the first electronic device and the second electronic device are both selected from a group consisting of industrial computer, smart phone, tablet computer, laptop computer, desktop computer, and a point of sale system (POS).

27. The material tracking and management system of claim 15, further comprising a third electronic device that enables the first electronic device to, in the presence of a wireless network, transmit the basic material information and the expiration date calibration parameter which are written into the memory of each of the electronic tags to the third electronic device, and that enables the second electronic device to receive the basic material information and the expiration date calibration parameter corresponding to each of the electronic tags from the third electronic device.

28. The material tracking and management system of claim 27, wherein the third electronic device is selected from a group consisting of cloud database, cloud server, cloud computing device, and cloud hard drive.
